# EUROPEAN PATENT APPLICATION

(11) **EP 3 572 033 A1**
(43) Date of publication of application: **27.11.2019**
(21) Application number: 18173714.9
(22) Date of filing: 22.05.2018
(51) Int. Cl.: A61C 8/00

(54) **JUXTA-OSSEOUS DENTAL IMPLANT**

(71) Applicant: Rodrigues, Rolando, 39100 Dole (FR)
(72) Inventor: Rodrigues, Rolando, 39100 Dole (FR)

(57) **Abstract**

The present invention relates to an implanted dental device that can be used in both maxillae and mandibulae (Fig.5,6,7) to be rehabilitated with/without abutments (Fig.8) in order to support unitary crowns, bridges or other more complex dental prosthesis either fixed or removable.

The Protodens is constituted by 2 connected pieces working has one (or fused into one) fixed to the bone and allowing a prosthetic element to be attached to it (by screwing or other), in order to be rehabilitated with crowns, abutments, or other prosthetic elements in order to allow other more complex fixed/removable dental prosthetic rehabilitations.

## Description

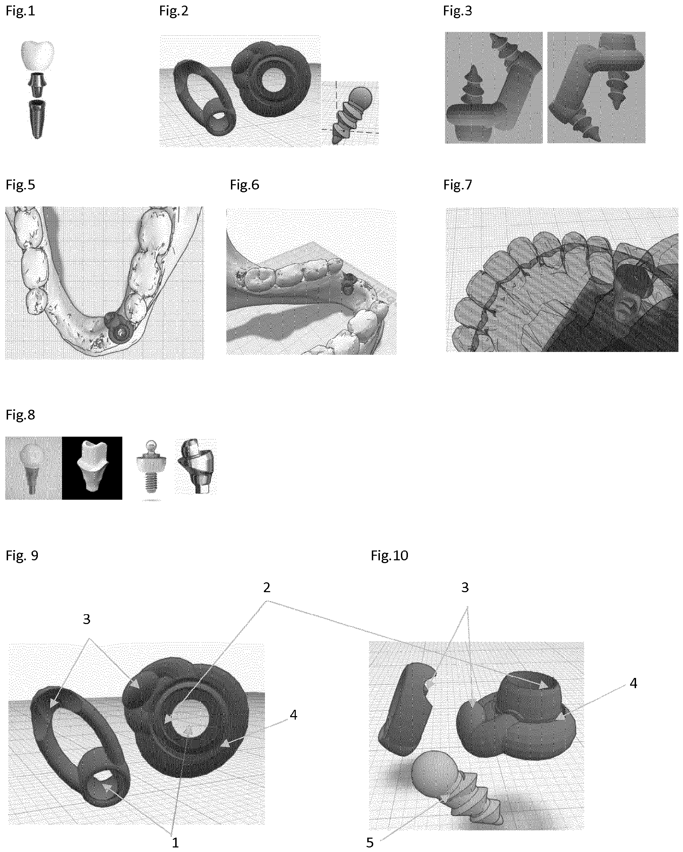

The present invention relates to a dental device that can be used in both maxillae and mandibulae (Fig.5,6,7) to be rehabilitated with/without abutments (Fig.8) in order to support unitary crowns, bridges or other more complex dental prosthesis either fixed or removable.

Prior art is constituted by one or two-piece dental implants (Fig.1) nowadays of different possible materials, and consisting in a surgically screwed implant, which after the traditional healing period of 6 months, can safely be rehabilitated with/without different types of abutments (Fig.8) to support unitary crowns, bridges or other more complex dental prosthesis either fixed or removable.

Surgical standard protocol, requires the flap opening of the mucosa, and according to the size and thickness of the implant, an adjusted drilling protocol is setting for perforation of the cortical bone and the cancellous bone, till the implant surgical site is prepared for screwing the implant into his final position.

The concept behind the implant therapy is that a surgically implanted screw can be "osseointegrated" or accepted by bone and be strong enough to substitute a tooth or multiple teeth.

Success of Implant therapy as long been considered high but, recently, mainly due to more demanding requirements in the definition of success, and with also higher quantity of implants placed, this rate have been lowering. (1)

In a time line categorization, complications of implant therapy can typically be categorized in early or late complication and may vary from biologic or mechanical reasons.

Typical early complications include surgical problems such as hemorrhage, damage to adjacent teeth, neurosensory disturbances, jaw fracture, maxillary sinus violations, bone necrosis.

Yet, big vulnerability is associated with the primary stability of the implant insertion and even if the correct insertion is achieved, the bone around the implant remains a sensitive issue due to the loading forces applied, and also because of the bacterial infiltration. The fact that there is a connexon between buccal environment and bone is a week point described by science as a reason for possible complications related with the implant therapy (2).

Major late biologic complications described in studies is peri-implant mucositis, while mechanical complications are connected with the prosthetic parts in function with the implants that may lead to failure.

Implant Therapy is also not able *per se* to be used every time. When in the case of large bone defects caused by previous infections and extractions, in the case of anatomically thin bone crests, or in anatomic areas where bone is short in height due to presence of noble anatomical structures like maxillary sinus and/or mandibular nerves, other surgical interventions are required (before or simultaneously), afecting the rate of success, and requiring more time in order to achieve the final dental rehabilitation. Examples of those are the use of bone graft procedures, Sinus lifts, lateralization of mandibular nerve and other more complex bone reconstructions.

The objective of this invention is to avoid above mentioned problems and to allow in any circumstance, the possibility of immediate dental rehabilitation with crowns, bridges or abutments for more complex prosthesis.

The Protodens consists of two parts connected (or fused) one palatal/lingual/vestibular called extension and another (occlusal) called occlusal body, both separately fixed to the cortical bone by self-perforating mini-screws. (Fig. 2 and Fig.3). A crown or other prosthetic element (e.g abutment) can be screwed to the occlusal body in order to be rehabilitated with fixed, removable prosthesis.

With the use of self-perforating mini-screws the fixing of each part is exempted of drilling, reducing therefore the inflammatory process, the risks and quantity of hemorrhage, the possibility of irreversibly damaging the noble anatomical areas, avoid over and /or under preparation of the bone site and overheating of the bone.

Since Protodens mini-screwing system is designed to be inserted in 3mm of deepness of bone, it relies mainly on the cortical bone, and considerably reduces the bone height, thickness or even quality of the cancellous bone of the desired area of rehabilitation. Another benefit is to reduce or completely remove the need of other surgical acts and or reducing the need/use for other materials (like synthetic/natural bone grafts).

Regarding physics, the models identifying the dynamics of the dental natural teeth reported by science (3), can help us distinguish the compressive and tensile stress types of forces that are absorbed trough the anatomical crown, and trough the anatomical roots. The pattern of forces suffered during chewing cycles shows the benefits of having 1 point of resistance in the lingual/palatal area of the lower and upper teeth and to maintain another point of resistance in the center of the occlusal area of the bone where the compressive stress is accumulated (separation of the anatomical roots).

It this regarding those facts that in Protodens, 2 pieces were designed. One to work as an extension in palatal/lingual/vestibular fixed with a miniscrew, and one occlusal also fixed with a miniscrew. The hole system is in connection and works as 1 piece, when the tensile stress is orientated through vestibular, and occlusal, yet in compressive forces these are absorbed by the occlusal piece alone and transmitted to the bone. The flattened area of the occlusal piece works like a "snowshoe" allowing better stress distribution to the bone.

Biologically, the occlusal piece of Protodens, has on her design a sulcus around the crown fitting area. This space should allow crevicular fluid to pass freely after rehabilitation. Also, if any cement shall be used, the excess would easy be visible, and away from the bone fixing points.

### Description of the images.

The protodens in Fig. 9 and 10 are showed in two different perspectives separated into her different elements. 1 Represents the fixing points were the minis-crews will be screwed, and in which the elements of protodens (extension and occlusal) will be fixed to the bone. In the element of Extension, the mini-screw position is expected to be angulated (from 45 to 60) to avoid touching the screw of the occlusal body, avoid inferior nerve and/or maxillary sinus. 2 represents the screwing threads for the prosthetic element. Through these threads, a crown, bridge or abutment will be screwed for the prosthetic dental rehabilitation. 3 Connector. The male/female engaging system will allow the full connection of both protodens elements. 4 Represents the sulcus of the occlusal piece of protodens in order to allow saliva to flow freely. 5 represents the mini-screw, with a round head. The round head, should allow its angulation during the placement (45 to 60 degrees), should avoid deformation forces and therefore reducing the unscrewing effect of a flattened head. This design of the head should also allow the perforating of the bone from the exterior of the mucosa, yet with the completely healing of the mucosa after few days, submerging the mini-screw and protecting from infiltration and reinforcing the fixation force of the protodens.

### References :

1 - https://www.dentaleconomics.com/articles/print/volume-104/issue-10/features/implant-complications-multiple-treatment-modalities-few-financial-options.html
2 - https://estudogeral.sib.uc.pt/bitstream/10316/35288/1/tese_Mestrado%20Rolando.pdf
3 - http://journals.plos.org/plosone/article?id=10.1371/journal.pone.0152663

## Claims

Protodens, the medical device system, constituted by 2 connected pieces working has one (or fused into one) fixed to the bone and allowing a prosthetic element to be attached to it (by screwing or other), in order to be rehabilitated with crowns, abutments, or other prosthetic elements in order to allow other more complex fixed/removable dental prosthetic rehabilitations.

Dependent of the first claim, the round head self-perforating mini-screw. The round head, allows its angulation during the placement (45 to 60 degrees), avoids the deformation forces suffered from the chewing cycles, therefore reducing the possibility of the unscrewing effect. This design of the head should also allow the perforating of the bone from the exterior of the mucosa, yet with the completely healing of the mucosa after few days. The "submerging" of the mini-screw by mucosa, is important to protect it from infiltration and to enhance the fixation through the fibers of the soft tissues.
